**Europäisches Patentamt**

**European Patent Office**

**Office européen des brevets**

(11) Numéro de publication: **0 206 845**
**B1**

# FASCICULE DE BREVET EUROPEEN

(45) Date de publication du fascicule du brevet:
**04.10.89**

(51) Int. Cl.⁴: **G01F 23/00**

(21) Numéro de dépôt: **86400880.0**

(22) Date de dépôt: **23.04.86**

(54) **Dispositif pour l'indication de la quantité d'un liquide dans un réservoir et réservoir pourvu d'un tel dispositif.**

(30) Priorité: **29.04.85 FR 8506497**

(43) Date de publication de la demande:
**30.12.86 Bulletin 86/52**

(45) Mention de la délivrance du brevet:
**04.10.89 Bulletin 89/40**

(84) Etats contractants désignés:
**BE DE GB IT NL**

(56) Documents cités:
**DE-A- 3 036 016**
**FR-A- 2 154 623**

(73) Titulaire: **AEROSPATIALE Société Nationale Industrielle, 37, Boulevard de Montmorency, F-75781 Paris Cédex 16(FR)**

(72) Inventeur: **Sarrat, Rolland, Chemin St. Roch, F-31700 Cornebarrieu(FR)**
Inventeur: **Verges, José, 25, Allée des Calanques, F-31770 Colomiers(FR)**

(74) Mandataire: **Bonnetat, Christian et al, Cabinet PROPI Conseils 23 rue de Léningrad, F-75008 Paris(FR)**

## Description

La présente invention concerne un dispositif pour l'indication de la quantité d'un liquide se trouvant dans un réservoir, ainsi qu'un réservoir pourvu d'un tel dispositif.

Quoique non exclusivement, elle s'applique tout particulièrement dans le cas d'un liquide consommable contenu dans un récipient lié à un véhicule, tel que réservoir de carburant ou boîte à engrenages, et susceptible de basculer par rapport à une position théorique de référence, par exemple à cause d'inégalités ou de défaut d'horizontabilité du sol ou de déformations de la suspension dudit véhicule.

On sait que la quantité d'un liquide contenu dans un réservoir est généralement appréhendée à partir de la hauteur du niveau dudit liquide dans le réservoir. Cependant, pour des raisons évidentes, les dispositifs simples usuels, tels que indicateurs visuels de niveau ou jauges plongeantes, ne peuvent être utilisés de façon fiable, lorsque ledit réservoir subit des inclinaisons par rapport à l'horizontale et que l'on a besoin d'une mesure précise.

Dans ce cas, on cherche à éviter les variations de hauteur du niveau du liquide par rapport aux parois du réservoir, variations dues à ces inclinaisons, en prélevant l'information de niveau, au voisinage du centre de la surface libre du liquide dans le réservoir. En effet, en cet endroit ledit niveau est normalement peu dépendant, ou en tout cas moins dépendant, de l'inclinaison du réservoir. Cependant, il faut alors prévoir des moyens optiques, mécaniques et/ou électriques pour transmettre l'information de niveau jusqu'à l'extérieur du réservoir. Outre le fait que ces moyens sont généralement coûteux, délicats et encombrants, il n'est pas toujours possible de les loger dans ledit réservoir : ceci est paticulièrement le cas lorsque ledit réservoir est un carter de boîte ce vitesses encombré de pignons.

Par ailleurs, le brevet FR-A 2 154 623 décrit un indicateur pour mesurer le niveau de liquide dans un récipient principal, comportant un récipient auxiliaire, solidaire du récipient principal et relié à celui-ci par une liaison fluide.

Une telle structure, notamment à cause de la liaison fluide, est compliquée et peu précise.

La présente invention a pour objet de remédier à ces inconvénients. Elle permet de fournir des indications précises, même lorsque le réservoir est soumis à des variations d'inclinaison, du fait qu'elle prend en compte une différence de niveau de liquides et non pas le seul niveau du liquide dont on veut déterminer la quantité.

A cette fin, selon l'invention, le dispositif destiné à indiquer la quantité d'un liquide contenu dans un réservoir, quelle que soit l'inclinaison de ce réservoir par rapport à l'horizontale, comportant un récipient auxiliaire qui est solidaire dudit réservoir et qui contient une quantité invariable d'un liquide auxiliaire dont le niveau sert de référence pour évaluer la quantité de liquide contenue à un instant donné dans ledit réservoir, est caractérisé en ce que le liquide du réservoir est entouré au moins partiellement par ledit récipient auxiliaire.

Ainsi, grâce à cette disposition, on peut comparer directement le niveau des deux liquides, avec une grande précision et sans complication mécanique.

Avantageusement, ledit réservoir est du type à double paroi, et ledit récipient auxiliaire est formé par l'espace compris entre les doubles parois dudit réservoir. Toutefois, dans le cas où le réservoir est susceptible de basculer essentiellement autour d'une direction horizontale principale, ledit récipient auxiliaire est avantageusement constitué par un tube formant une boucle qui entoure ledit réservoir et dont au moins la partie inférieure, en forme approximative de U, est transversale à ladite direction horizontale de basculement.

Le récipient auxiliaire forme de préférence une enceinte close, afin d'éviter les variations de quantité du liquide auxiliaire (par exemple par évaporation ou par écoulement), ainsi que les éventuelles pollutions dudit liquide auxiliaire.

La comparaison entre le niveau de référence du liquide auxiliaire et le niveau instantané du liquide contenu dans le réservoir peut être réalisée de toute manière appropriée. Par exemple, on peut prévoir des détecteurs électriques de niveau fournissant leurs mesures à un comparateur.

Cependant, dans un mode de réalisation particulièrement simple, on prévoit que, au moins à des emplacements voisins, le niveau de référence du liquide auxiliaire et le niveau instantané du réservoir soient visibles, en formant ainsi un appareil de lecture. Ainsi, une simple comparaison visuelle permet de déterminer la quantité de liquide du réservoir. De préférence, pour faciliter une telle comparaison visuelle, on peut colorer le liquide auxiliaire ou bien encore prévoir un flotteur gradué ou coloré dans ledit récipient auxiliaire. Avantageusement, on prévoit au moins deux tels appareils de lecture à des emplacements différents du réservoir, afin de faciliter la lecture et de permettre le montage du réservoir dans différentes configurations.

Notamment dans le cas mentionné ci-dessus, où ledit récipient auxiliaire est tubulaire, ledit flotteur peut présenter une forme extérieure correspondant à la forme intérieure dudit récipient auxiliaire, de façon à pouvoir être guidé par celui-ci, lors des variations d'inclinaison.

Dans un mode de réalisation avantageux d'un réservoir pourvu d'un récipient auxiliaire tubulaire selon l'invention, ledit récipient auxiliaire tubulaire est solidaire des parois dudit réservoir (extérieurement à celui-ci ou bien encore ledit dispositif tubulaire est incorporé auxdites parois) et ledit réservoir comporte une fenêtre transparente laissant voir le niveau du liquide dans le réservoir et le niveau du liquide dans ledit récipient auxiliaire tubulaire, qui, à cet effet, est réalisé pour être transparent, au moins en regard de ladite fenêtre.

Les figures du dessin annexé feront bien comprendre comment l'invention peut être réalisée. Sur ces figures, des références identiques désignent des éléments semblables.

Les figures 1a et 1d a illustrent schématiquement le principe du dispositif selon l'invention.

Les figures 2a à 2c illustrent schématiquement un mode de réalisation de l'invention, dans trois positions d'inclinaison différente.

Les figures 3, 4 et 5 montrent des exemples de réalisation des moyens de lecture du dispositif des figures 2a à 2c, en vue selon la flèche F de cette dernière figure.

La figure 6 est une vue en coupe agrandie partielle, selon la ligne VI–VI des figures 3 ou 4.

Les figures 7 et 8 illustrent une application du dispositif selon l'invention.

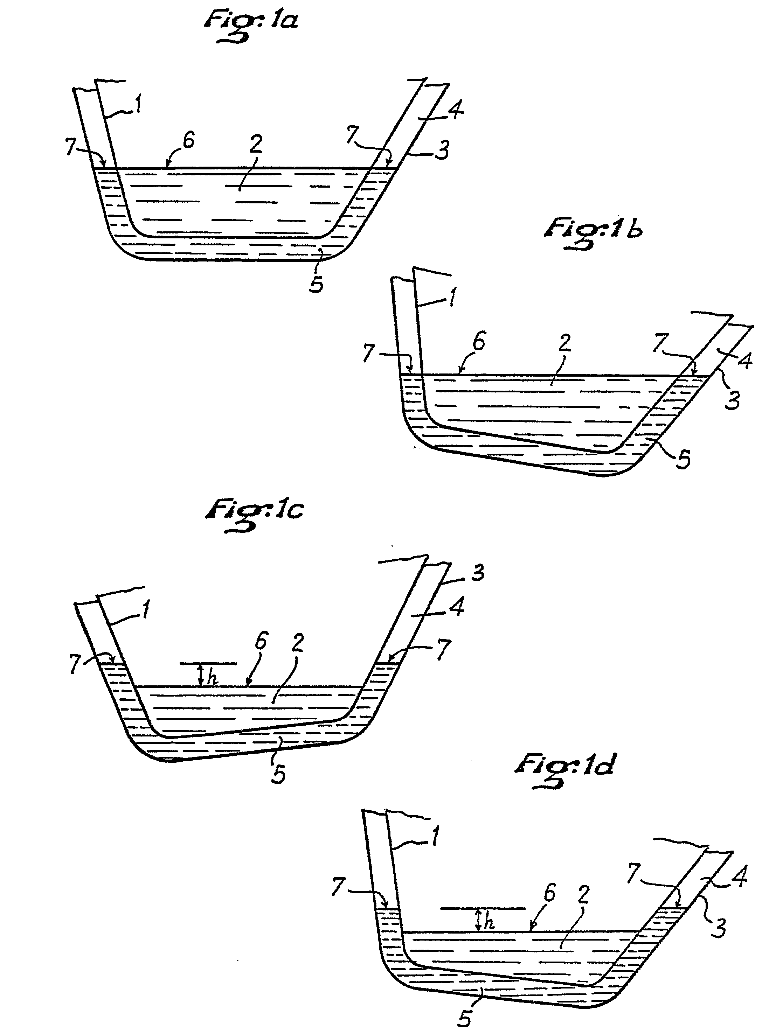

Sur les figures 1a à 1d, on a représenté un réservoir 1 contenant une quantité temporellement variable d'un liquide 2, tel qu'un carburant, un combustible, une huile de lubrification, etc... Le réservoir 1 est rendu solidaire d'un récipient 3, entourant extérieurement ledit réservoir 1 et ménageant avec celui-ci un espace intermédiaire 4, dans lequel est contenue une quantité invariable de liquide auxiliaire 5. Le réservoir 1 et le récipient 3 forment par exemple une cavité à double paroi.

La figure 1a montre l'ensemble du réservoir, et du récipient 3 dans sa position théorique vis-à-vis de l'horizontale. De plus, à titre d'exemple, on a choisi de représenter sur la figure 1a une situation pour laquelle le niveau 6 du liquide 2 et le niveau 7 du liquide 5 sont alignés.

Si, comme le montre la figure 1b, l'ensemble 1–3 est basculé autour d'une (ou plusieurs) directions horizontales à partir de la position de la figure 1a, il va de soi que les niveaux 6 et 7 restent alignés.

Par ailleurs si, comme le montrent les figures 1c et 1d, la quantité de liquide 2 diminue (ou augmente) dans le récipient 1, le niveau 6 s'abaisse (ou monte). Cependant, puisque la quantité de liquide 5 est invariable, le niveau 7 peut servir de référence. Par suite, la différence de niveau h entre le niveau 6 et le niveau 7 est représentative de la diminution ou de l'augmentation de la quantité de liquide 2 dans le réservoir 1. De plus, la différence de niveau $\underline{h}$ est la même, à un instant donné, quelle que soit l'inclinaison de l'ensemble 1–3 par rapport à l'horizontale (voir les figures 1c et 1d).

Le niveau 7 du liquide 5 peut donc servir de niveau de référence pour déterminer la variation du niveau 6 et/ou pour mesurer la quantité de liquide 2 dans le récipient 1, si l'on connaît la capacité dudit récipient.

On remarquera que pour ce faire, il n'est pas nécessaire qu'initialement le niveau 6 soit coplanaire avec le niveau 7, comme cela est représenté sur les figures 1a et 1b. Toutefois, cette disposition est avantageuse dans le cas d'un liquide 2 consommable, comme par exemple un carburant dans un réservoir ou une huile de lubrification dans un carter. En effet, en calant initialement, au remplissage du réservoir 1, le niveau 6 du liquide 2 sur le niveau 7 du liquide 5, il est possible de connaître automatiquement et directement la consommation du liquide 2 en déterminant la différence de niveau $\underline{h}$.

La variante de réalisation des figures 2a à 2c est plus spécialement destinée aux réservoirs susceptibles de subir des inclinaisons autour d'une direction générale horizontale, représentée comme orthogonale au plan du dessin.

Dans cette variante de réalisation, le réservoir 1 est clos et ses parois comportent un appareil de lecture L pourvu d'une fenêtre transparente 8, à travers laquelle le niveau 6 du liquide 2 est visible. Le récipient 3 présente la forme d'un tube 9 formant une boucle qui entoure le réservoir 1 et dont au moins la partie inférieure, en forme approximative de U, est transversale à ladite direction horizontale de basculement.

En regard de la fenêtre transparente 8, le tube 9 comporte une partie transparente 10, éventuellement élargie, dans laquelle est guidé un flotteur 11. Le liquide 5 peut être introduit dans le tube 9, ou en être éliminé, grâce à des raccords 12 et 13.

Comme on peut le voir sur les figures 2a à 2c, le niveau initial 7 du liquide 5 dans le tube 9 est par exemple ajusté pour que la partie supérieure 14 du flotteur 11 se trouve alignée avec le niveau initial 6 du liquide 2. Un tel alignement est valable bien entendu que le réservoir 1 soit dans sa position théorique horizontale (figure 2a) ou dans une position inclinée (figure 2b).

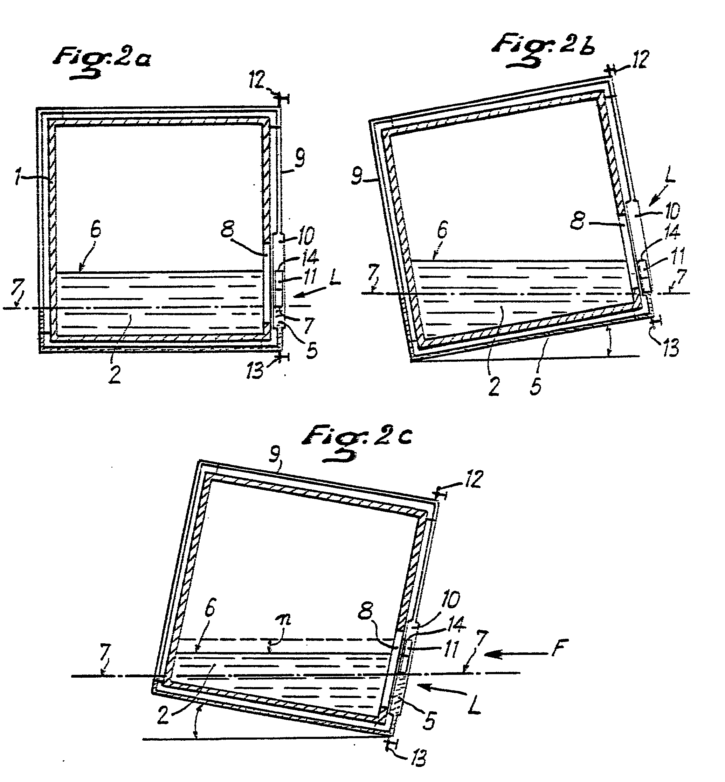

Au fur et à mesure que le niveau 6 du liquide 2 baisse dans le réservoir, la consommation dudit liquide peut être déterminée en examinant la différence de niveau à entre ledit niveau 6 et la partie supérieure 14 du flotteur 11, à travers la fenêtre 8 et la partie de tube 19 (figure 2c).

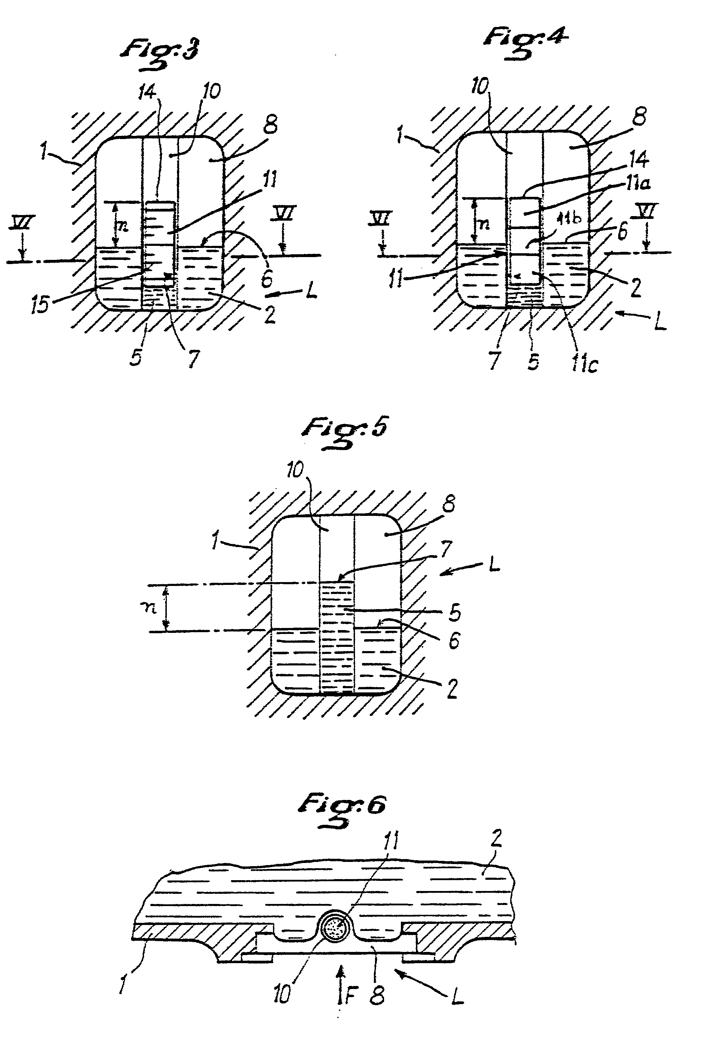

Afin de faciliter cette détermination, le flotteur 11 peut comporter plusieurs zones colorées différentes 11a, 11b, 11c (figure 4) ou bien être pourvu de graduations 15 (figure 3).

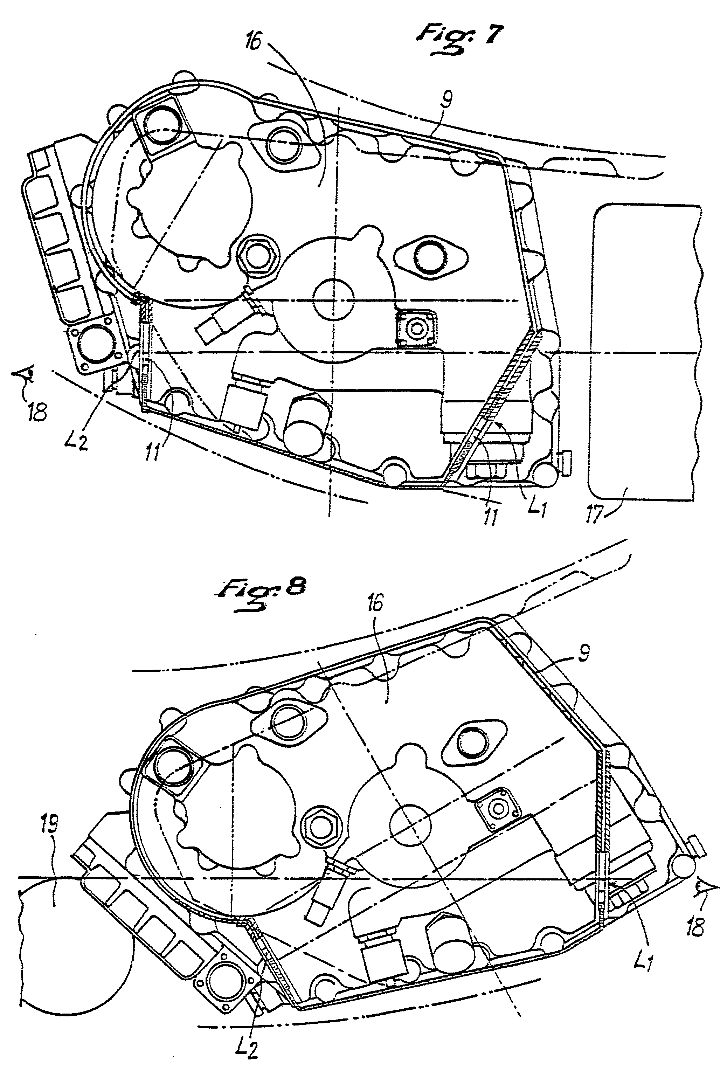

Plus simplement, le flotteur 11 peut être éliminé, le liquide 5 étant alors coloré (figure 5).

Sur la coupe de la figure 6, on peut voir que la fenêtre transparente 8 fait partie intégrante des parois du récipient 1 et que la partie 10 du tube 9 est incorporée à ladite fenêtre transparente 8.

Dans la variante de réalisation des figures 2a à 2c, le dispositif selon l'invention ne comporte qu'un seul appareil de lecture L, tel que par exemple illustré sur les figures 3 à 6. Il peut être avantageux que ce dispositif comporte plus d'un tel appareil de lecture L.

Par exemple, sur les figures 7 et 8, on a représenté un moteur 16 qui, dans des utilisations différentes, peut être monté avec des inclinaisons et des environnements différents. Comme on peut le voir sur ces figures 7 et 8, le moteur 16 est équipé d'un dispositif selon l'invention, destiné à contrôler le niveau de l'huile de lubrification duldit moteur. Ce dispositif comporte un récipient tubulaire périphérique 9 comme décrit ci-dessus, mais deux appareils de lecture L1 et L2 opposés, comportant chacun une fenêtre 10 et un flotteur 11.

La figure 7 montre que, dans une première configuration, l'appareil L1 est occulté par des dispositifs 17 de sorte qu'il ne peut être utilisé. En revanche, l'appareil L2 est dégagé et peut être examiné par l'œil 18 d'un observateur.

Par ailleurs, dans la seconde configuration de la figure 8, l'appareil L2 est occulté par des dispositifs 19 et donc inutilisable, alors que l'appareil L1 est visible.

Ainsi, grâce à la présence des deux appareils L1 et L2, on peut disposer le moteur 16 selon des configurations différentes sans avoir à modifier le dispositif selon l'invention.

On remarquera que le conduit 9 du dispositif selon l'invention peut être obtenu soit par usinage du carter du moteur 16, soit directement de fonderie dudit carter, ou bien encore être rapporté.

Ainsi, selon l'invention, on obtient un appareil de vérification de niveau ne comportant pas de pièces mobiles (à l'exception de l'éventuel flotteur 11), ne nécessitant pas de source d'énergie, de fonctionnement fiable et de lecture simple, précise et sans ambiguïté; le liquide auxiliaire de référence est indépendant du liquide à surveiller et est isolé de tout contact extérieur; il est donc inaltérable et sa quantité invariable. Après étalonnage, les moyens de raccord 12 et 13 peuvent être définitivement obturés.

## Revendications

1. Dispositif destiné à indiquer la quantité d'un liquide (2) contenu dans un réservoir (1), quelle que soit l'inclinaison de ce réservoir par rapport à l'horizontale, comportant un récipient auxiliaire (3) qui est solidaire dudit réservoir et qui contient une quantité invariable d'un liquide auxiliaire (5) dont le niveau (7) sert de référence pour évaluer la quantité de liquide (2) contenue à un instant donné dans ledit réservoir (1), caractérisé en ce que le liquide (2) du réservoir (1) est entouré au moins partiellement par ledit récipient auxiliaire (3).

2. Dispositif selon la revendication 1, caractérisé en ce que ledit réservoir est du type à double paroi et en ce que ledit récipient auxiliaire est formé par l'espace (4) compris entre les doubles parois dudit réservoir.

3. Dispositif selon la revendication 1, pour un réservoir susceptible de basculer essentiellement autour d'une direction horizontale principale, caractérisé en ce que ledit récipient auxiliaire est constitué par un tube (9) formant une boucle qui entoure ledit réservoir (1) et dont au moins la partie inférieure, en forme approximative de U, est transversale à ladite direction horizontale de basculement.

4. Dispositif selon l'une quelconque des revendications 1 à 3, caractérisé en ce que ledit récipient auxiliaire (3, 9) forme une enceinte close.

5. Dispositif selon l'une quelconque des revendications 1 à 4, caractérisé en ce que, au moins à des emplacements voisins, le niveau de référence (7) du liquide auxiliaire (5) et le niveau instantané (6) du liquide du réservoir (1) sont visibles, formant ainsi un appareil de lecture (L).

6. Dispositif selon la revendication 5, caractérisé en ce que ledit appareil de lecture comporte un flotteur (11) disposé dans ledit récipient auxiliaire (3, 9) et en ce que ledit flotteur (11) est guidé par ledit récipient auxiliaire dans ses mouvements consécutifs à des variations d'inclinaison du réservoir.

7. Dispositif selon la revendication 5, caractérisé en ce qu'il comporte au moins deux appareils de lecture (L1, L2) à des emplacements différents dudit réservoir (1).

8. Réservoir destiné à contenir un liquide (2) dont la quantité est susceptible de varier dans le temps, caractérisé en ce qu'il comporte un dispositif tel que spécifié sous l'une quelconque des revendications 1 à 7.

9. Réservoir selon la revendication 8, comportant un dispositif tel que spécifié sous la revendication 5, caractérisé en ce que ledit récipient auxiliaire tubulaire (9) est solidaire des parois dudit réservoir (1) et ledit réservoir (1) comporte une fenêtre transparente (10) laissant voir le niveau du liquide dans le réservoir et le niveau du liquide dans ledit récipient auxiliaire tubulaire, qui à cet effet, est réalisé pour être transparent, au moins en regard de ladite fenêtre.

## Claims

1. Device for indicating the quantity of a liquid (2) contained in a reservoir or tank (1), whatever the inclination of this reservoir with respect to the horizontal, comprising an auxiliary recipient (3) which is fast with said reservoir and which contains an invariable quantity of an auxiliary liquid (5) of which the level (7) serves as reference for assessing the quantity of liquid (2) contained at a given instant in said reservoir (1), characterized in that the liquid (2) in the reservoir (1) is surrounded at least partially by said auxiliary recipient (3).

2. Device according to claim 1, characterized in that said reservoir is of the double wall type and in that said auxiliary recipient is formed by the space (4) included between the double walls of said reservoir.

3. Device according to claim 1, for a reservoir likely to tip essentially about a principal horizontal direction, characterized in that said auxiliary recipient is constituted by a tube (9) forming a loop surrounding said reservoir (1) and of which at least the lower portion, presenting the at least approximate form of a U, is transverse to said horizontal direction of tipping.

4. Device according to any one of claims 1 to 3, characterized in that said auxiliary recipient (3, 9) forms a closed enclosure.

5. Device according to any one of claims 1 to 4, characterized in that the reference level (7) of the auxiliary liquid (5) and the instantaneous level (6) of the liquid in the reservoir (1) are visible at least at adjacent spots, thus forming a reading apparatus (L).

6. Device according to claim 5, characterized in that said reading apparatus comprises a float (11) disposed in said auxiliary recipient (3, 9) and in that said float (11) is guided by said auxiliary recipient in its movements consecutive to variations in inclination of the reservoir.

7. Device according to claim 5, characterized in that it comprises at least two reading apparatuses (L1, L2) at different spots in said reservoir (1).

8. Reservoir or tank adapted to contain a liquid (2) whose quantity may vary in time, characterized in that it comprises a device as specified in any one of claims 1 to 7.

9. Reservoir according to claim 8, comprising a device as specified in claim 5, characterized in that said tubular auxiliary recipient (9) is fast with the walls of said reservoir (1) and said reservoir (1) comprises a transparent window (10) showing the level of liquid in the reservoir and the level of liquid in said tubular auxiliary recipient which, to that end, is transparent, at least opposite said window.

**Patentansprüche**

1. Vorrichtung zum Anzeigen der Flüssigkeitsmenge (2) in einem Behälter (1), wie auch immer die Neigung dieses Behälters zur Horizontalen sein mag, mit einem mit diesem Behälter fest verbundenen Hilfsbehälter (3), der eine unveränderliche Menge einer Hilfsflüssigkeit (5) enthält, deren Füllstand (7) als Bezug zur Auswertung der zu einem gegebenen Zeitpunkt im Behälter (1) enthaltenen Flüssigkeitsmenge (2) dient, dadurch gekennzeichnet, daß die Flüssigkeitsmenge (2) des Behälters (1) wenigstens teilweise von dem Hilfsbehälter (3) umgeben ist.

2. Vorrichtung nach Anspruch 1, dadurch gekennzeichnet, daß der Behälter (1) doppelwandig ausgebildet ist, und daß der Hilfsbehälter (3) durch den Raum (4) zwischen den Doppelwänden des Behälters (1) gebildet wird.

3. Vorrichtung nach Anspruch 1 für einen Behälter, der im wesentlichen um eine horizontale Hauptrichtung kippen kann, dadurch gekennzeichnet, daß der Hilfsbehälter (3) aus einem eine Schleife um den Behälter (1) bildenden Rohr (9) aufgebaut ist, zumindest dessen Unterteil in annähernder U-Form quer zur horizontalen Kipprichtung verläuft.

4. Vorrichtung nach einem der Ansprüche 1 bis 4, dadurch gekennzeichnet, daß der Hilfsbehälter (3, 9) einen geschlossenen Mantel bildet.

5. Vorrichtung nach einem der Ansprüche 1 bis 4, dadurch gekennzeichnet, daß wenigstens an benachbarten Stellen der Bezugsfüllstand (7) der Hilfsflüssigkeit (5) und der momentane Füllstand (6) der Flüssigkeit im Behälter (1) sichtbar sind, wodurch ein Ablesegerät (L) gebildet wird.

6. Vorrichtung nach Anspruch 5, dadurch gekennzeichnet, daß das Ablesegerät einen in dem Hilfsbehälter (3, 9) angeordneten Schwimmer (11) aufweist, und daß der Schwimmer (11) in seinen den Neigungsänderungen des Behälters (1) folgenden Bewegungen vom Hilfsbehälter (3, 9) geführt wird.

7. Vorrichtung nach Anspruch 5, dadurch gekennzeichnet, daß sie wenigstens zwei Ablesegeräte (L1, L2) an verschiedenen Stellen des Behälters (1) aufweist.

8. Behälter zum Beinhalten einer Flüssigkeit (2), deren Menge sich in der Zeit ändern kann, dadurch gekennzeichnet, daß er eine Vorrichtung enthält, wie in einem der Ansprüche 1 bis 7 angegeben.

9. Vorrichtung nach Anspruch 8, mit einer Vorrichtung wie in Anspruch 5 angegeben, dadurch gekennzeichnet, daß der rohrförmige Hilfsbehälter (9) fest mit den Wänden des Behälters (1) verbunden ist, und daß der Behälter (1) ein transparentes Fenster (10) aufweist, das die Sicht auf den Flüssigkeitsfüllstand im Behälter (1) und den des rohrförmigen Hilfsbehälters (9) erlaubt, der zu diesem Zweck, zumindest in Bezug auf das Fenster, transparent ausgeführt ist.

*Fig:1a*

*Fig:1b*

*Fig:1c*

*Fig:1d*

Fig. 2a

Fig. 2b

Fig. 2c

## Fig. 3

## Fig. 4

## Fig. 5

## Fig. 6

*Fig. 7*

*Fig. 8*